Europäisches Patentamt

**European Patent Office**

Office européen des brevets

(11) Publication number: **0 178 061 B1**

## EUROPEAN PATENT SPECIFICATION

(45) Date of publication of patent specification: **23.10.91**

(51) Int. Cl.5: **C09J 123/00,** C08L 23/10, //(C08L23/04,23:20,23:10)

(21) Application number: **85306170.3**

(22) Date of filing: **30.08.85**

(54) **Packaging film or sheet.**

(30) Priority: **31.08.84 US 646390**

(43) Date of publication of application:
**16.04.86 Bulletin 86/16**

(45) Publication of the grant of the patent:
**23.10.91 Bulletin 91/43**

(84) Designated Contracting States:
**AT BE CH DE FR GB IT LI LU NL SE**

(56) References cited:
**US-A- 3 458 604**
**US-A- 4 189 519**

(73) Proprietor: **SHELL OIL COMPANY**
**900, Louisiana**
**Houston Texas 77001(US)**

(72) Inventor: **Hwo, Charles C.**
**2710, Sugarwood Drive**
**Sugar Land Texas 77478(US)**

(74) Representative: **Myerscough, Philip Boyd et al**
**J.A.Kemp & Co. 14, South Square Gray's Inn**
**London, WC1R 5EU(GB)**

Rank Xerox (UK) Business Services

EP 0 178 061 B1

## Description

The present invention relates to a heat sealable wrapping or packaging film which is capable of forming a peelable seal and which exhibits good optical qualities. The seal is achievable either between two films of this kind or between one film of this kind and another wrappable packing film of any other kind without affecting optical qualities.

A peelable seal is defined to be the seal or joint between two films produced by heat sealing or impulse sealing, the joint thus formed having the property of being able to open in the original plane of joining of the two films by the action of a pulling force, without wrenching off or tearing occurring in the material of the two films used to make up the joint. For the purposes of the present invention, the peelable seal must possess a mechanical resistance sufficient to maintain the wholeness and the tight-seal properties of the packing and wrapping during storage and transport until such time as the packing or wrapping is opened by the user of the article. The mechanical resistance of the peelable seal must be low enough to permit ready manual opening of the joint, i.e. without the use of any auxiliary instrument.

In addition, a film for use in wrapping or packing of certain commercial products must exhibit good optical qualities, such as low percent haze. Foodstuffs, for example, fruit, vegetables and meat require a wrapping or packaging of very transparent films, as do medical and surgical products.

In the past, many thermoplastic materials have been employed in the manufacture of films capable of forming peelable seals. For example, US-A-4,189,519 discloses a blend for producing a peelable heat seal comprising 50 to 90 percent by weight of a copolymer of 80 to 96 percent by weight ethylene and 4 to 20 percent by weight of an ethylenically unsaturated ester and 10 to 50 percent by weight of a crystalline isotactic polybutylene. While providing a peel seal this film does not exhibit the low percent haze values characteristic of a film with good optics. US-A-3,900,534 discloses thermoplastic shrink films with good heat seal characteristics and good optical properties, but does not address the need for a peel seal film which also has good optics.

US-A-3 458 604 describes nucleated polymer compositions comprising polyethylene and from 0.01% to 10%, by weight of the composition, of isotactic polypropylene, itself nucleated, preferably with a second α-olefin, e.g. 3-methyl butene-1.

There has been a long felt need for a wrapping or packaging material having easy peelability at the seal and yet which possesses good optics which results in a transparent film for meat and other articles where it may be necessary or desirable for the consumer clearly to see the wrapped product.

It has now been found that certain properties including heat seal strength, peel seal characteristics and optical clarity of wrapping films or sheets may be improved by fabricating films or sheets from blends of an ethylene homo-polymer or copolymer, a butene-1 homo-polymer or copolymer and a propylene homo-polymer or copolymer.

Accordingly the invention provides a packaging film or sheet of improved clarity and capable of forming peel seals, which comprises a mixture of:

(a) from 65 to 85 percent by weight of an ethylene homo-polymer or copolymer of ethylene with vinyl acetate or methyl acrylate;

(b) from 5 to 30 percent by weight of a butene-1 homo-polymer or copolymer; and

(c) from 3 to 15 percent by weight of a propylene homo-polymer or copolymer.

It has been suprisingly found that the selective addition of certain amounts of a propylene homo-polymer or copolymer to a blend of butene-1 homo-polymer or copolymer and an ethylene homo-polymer or specified copolymer (such as polyethylene or EVA) produces peel sealable films or sheets which also exhibit improved optical properties and processability. (In the discussion which follows reference will be made to films but the invention relates also to sheets.)

Preferably the film composition comprises a mixture which contains from 70 to 80 percent by weight of the ethylene polymer (a), from 10 to 25 percent by weight of the butene-1 polymer (b) and from 5 to 10 percent by weight of the propylene polymer (c).

More preferably, the film composition comprises a mixture which contains about 80 percent by weight of (a), about 15 percent by weight of (b) and about 5 percent by weight of (c).

The ethylene polymer (a) may be, for example, linear low density polyethylene (LLDPE), low density polyethylene (LDPE), medium density polyethylene (MDPE), ethylene/vinyl acetate copolymer (EVA), ethylene/methyl acrylate copolymer (EMA), or high density polyethylene (HDPE) and is most preferably low density polyethylene or ethylene/vinyl acetate copolymer.

The said polymer mixtures may be formed into an oriented or unoriented film by casting or film blowing method. After fabrication the film can be heat sealed by sealing jaws at a preset temperature, pressure and dwell. The seal strength is tested by an Instron tensile tester at 25.4 cm/min (10 inches/min) crosshead

2

speed. Maximum strength on a 2.54 cm (one inch) width strip was designated as peel seal strength.

These manufacturing techniques apply to film, although this invention may also apply to sheeting. Film refers to shaped plastics that are comparatively thin and have a maximum thickness of 0.25 mm (0.010 inches). Sheeting is a shaped plastics having a thickness greater than 0.25 mm (0.010 inches).

The present invention also provides a laminated structure comprising a coating layer of a film or sheet of the blend composition on a substrate, for example a substrate of nylon, polyester, polyvinyl chloride (PVC), high density polyethylene (HDPE) or polypropylene (PP). The peel seal coat, which consists of the blend of (a), (b) and (c) is coated onto the selected substrate.

The laminated structure can be made by extrusion coating, co-extrusion solvent coating or by making two separate films that are then laminated. If the laminate is made by extrusion coating, the laminate is made by the casting method which is a flat die-melt extrusion process. If the laminate is made by co-extrusion, this may be done by either the melt extrusion flat die-casting process or by film blowing which consists of melt extrusion with a circular die. The lamination may be prepared from two separate films which were prefabricated by either the blowing or the casting method.

Melt extrusion with a flat die (casting) may be accomplished for thermoplastic polymers by using a flat die or slot die. The extrusion process starts with a polymer in a form that can be fed continuously into an extruder by means of a screw or pneumatic tube. Sometimes the polymers are combined with materials such as plasticizers, lubricants, stabilizers and colorants by means of Banbury mixers. The resulting mix is extruded through rod shaped dies and chipped into pellets. Pelletized polymer is fed into a screw conveyor into the end of a screw-type extruder and is heated and made into viscous fluid in a cylinder by means of a revolving, helical screw. The sheet emitting from the die is quenched on a temperature controlled chill roll. Finished films may be subject to a two-way stretching using continuous tenter-frame operations in biaxial orientation.

The following Examples serve to illustrate the invention.

## EXAMPLE 1

## BLOWN FILM

Two polybutylene film grades (Shell PB 1600 SA and Shell PB 1710 SA) having a melt index (MI) of about 1.0 g/10 min. and a density of about 0.910 g/cm$^3$ were separately dry blended in a tumble mixer with 80 percent by weight of polyethylene (NA 386 by USI Chemical). The resultant blends were extruded at a die temperature of about 191°C (375°F) into blown films of about 0.05 mm (2.0 mils) thickness each using a circular die. Optical properties were measured after the film had been aged at room temperature for seven days.

Also, after the film was cooled, 2.54 cm (one inch) wide strips were cut from the film at locations across its width and opposite sides of the samples were then laminated together in face to face contact, at a pressure of 140 kPa (20 pounds per square inch) and a dwell time of about two seconds. Physical properties are given for the various films in the following Tables. Table 1 illustrates the optical properties of blown film from a polyethylene/polybutylene (PE/PB) blend, or a polyethylene/polybutylene/polypropylene blend (PE/PB/PP) for peel seal applications.

## Table 1

### Optical Properties of Blown Film From PE/PB or PE/PB/PP Blends for Peel Seal Applications for Two Commercial Polybutylene Film Grades

| Blend Composition | Haze, % | Gloss (45°) | Clarity, % |
|---|---|---|---|
| 1.  80% PE + 20% PB 1600SA - Control | 17.4 | 25 | 0.3 |
| 2.  80% PE + 20% PB 1710SA | 15.4 | 33 | 0.46 |

Note:  PE is USI NA 386 polyethylene at MI = 1.5

PB 1600SA is Shell polybutylene at MI = 1.0

PB 1710SA is Shell polybutylene at MI = 1.0

Haze and clarity are based on ASTM D1003, Gloss value based on ASTM D-2457.

As may be seen from Table 1, Formulation No. 1 containing 20 weight percent PB 1600SA and 80 weight percent polyethylene (PE) exhibited a high haze value of 17.4. PB 1600SA consisted of Shell polybutylene-1 PB 8640, 8% polyethylene, 0.08% slip additive (S) and 0.3% antiblock agent (A). The slip additive may be a primary amide and the antiblocking agent may be a silica. In the present case, an oleamide was used by the name Keamide U® available from Witco Chemical and a silica under the name of Superfloss® was used as the antiblocking agent, available from Johns Manville. Formulation No. 2 contained 20 weight percent PB 1710SA. PB 1710SA consisted of Shell polybutene-1 PB 8640, 7% Shell polypropylene (PP), 0.08% slip additive(s) and 0.3% antiblock agent (A). The slip and antiblock agent used for PB 1710SA are the same as those for PB 1600SA.

As indicated in Table 1, replacing polyethylene in PB 1600SA of Formulation No. 1 with polypropylene (in PB 1710SA) of Formulation No. 2 (overall polypropylene content = 1.4w%) improves the optical properties of the blends. The improvement of optical properties from the PE/PB/PP tertiary blend over the PE/PB binary blend is further illustrated in the following Example.

EXAMPLE 2

BLOWN FILM

Polybutylene (PB 8640) having a melt index of about 1 g/10 min and density of about 0.910 $g/cm^3$ was dry blended in a tumbler mixer with polyethylene (USI NA 386) and/or polypropylene (Shell PP 5520). The resultant blends were prepared into film by the same fabrication method as stated in Example 1. Table 2 illustrates the optical properties of blown film from a polyethylene/polybutylene (PE/PB) or polyethylene/polybutylene/polypropylene (PE/PB/PP) blend.

## Table 2

### OPTICAL PROPERTIES OF BLOWN FILM FROM PE/PB/PP
### BLENDS FOR PEEL SEAL APPLICATIONS

| Blend Composition | Haze, % | Gloss (45°) | Clarity % |
|---|---|---|---|
| 1. PE + 20% PB 8640 – Control | 14.9 | 39 | 0.46 |
| 2. PE + 20% PB 8640 + 5% PP 5520 | 12.4 | 39 | 0.48 |
| 3. PE + 15% PB 8640 + 5% PP 5520 | 12.5 | 37 | 0.88 |
| 4. PE + 20% PB 8640 + 10% PP 5520 | 12.6 | 42 | 0.52 |
| 5. PE + 10% PB 8640 + 10% PP 5520 | 10.3 | 46 | 1.7 |

Note: PE is USI NA386 Polyethylene at MI = 1.5

PB 8640 is Shell Polybutylene at MI = 1.0 or MF = 2.5

PP 5520 is Shell Polypropylene at MF = 5.0

Haze and clarity values based on ASTM D-1003, Gloss

value based on ASTM D-2457.

As may be seen from Table 2, Formulation No. 1 (the control) containing 20 percent polybutylene-1 and 80 percent polyethylene exhibited a high haze value of 14.9 percent. Formulation No. 2 contained 20 percent PB 8640 and, additionally, 5 percent PP 5520. Haze value improved to 12.4 percent.

Formulation No. 3 contained 15 percent PB 8640 and 5 percent PP 5520 - the same as Formulation No. 2 but 5 percent less PB 8640. Interestingly, Formulation No. 3 exhibited a haze value almost identical to that of Formulation No. 2 and yet Formulation No. 3 contained 5 percent less PB 8640.

Formulation No. 4 illustrates that an increase in the relative percent of polypropylene (PP 5520) to the 20 percent PB 8640 of Formulation No. 2 results in no significant improvement in haze. However, in Formulation No. 5 the use of as low as 10 percent PB 8640 combined with 10 percent PP 5520 results in a quite low haze value of 10.3 percent. But Formulation No. 5 exhibits poor sealability due to the low percent of PB 8640 used (10 percent). This will be explained further in Table 3.

Thus, it is apparent from Table 2 that Formulation No. 3 is the preferred formulation - yielding a quite acceptable haze value of 12.5 percent. For example, compared to the haze value obtained by the control (14.9 percent), Formulation No. 3 surprisingly exhibits a remarkable decrease in percent haze and an increase in clarity.

## TABLE 3

### PEEL-SEAL STRENGTH OF BLOWN FILM FROM PB/PE/PP BLENDS

| BLEND COMPOSITION | PEELABLE SEAL STRENGTH, G/2.54 cm WIDTH SEALING TEMPERATURE °C (°F) | | | |
|---|---|---|---|---|
| | 104 (220) | 110 (230) | 116 (240) | 127 (260) |
| 1. PE + 20% PB 8640 - Control | 158 | 166 | 274 | 318 |
| 2. PE + 20% PB 8640 + 5% PP 5520 | 132 | 143 | 462 | 454 |
| 3. PE + 15% PB 8640 + 5% PP 5520 | 159 | 156 | 386 | 438 |
| 4. PE + 20% PB 8640 + 10% PP 5520 | 236 | – | 419 | 415 |
| 5. PE + 10% PB 8640 + 10% PP 5520 | – | 145 | 150 | 191 |

Note: Film Thickness is 0.05 mm (2 mils), Sealing
Conditions:
2 Sec. Dwell, 140 kPa (20 psi), Two Sides Heated and
One Side with Teflon Cloth.
PB is USI NA386 Polyethylene at MI = 1.5
PB 8640 is Shell Polybutylene at MI = 1.0 or MF = 2.5
PP 5520 is Shell Polypropylene at MF = 5.0
PB 1600SA is Shell Polybutylene at MI = 1.0 or MF = 2.5
PB 1710SA is Shell Polybutylene at MI = 1.0 or MF = 2.5
Seal strength tested by an Instron tester at 25.4
cm/min (10 inches/min).

As may be seen from Table 3, five different blend compositions were tested for seal strength in grams per 2.54 cm at sealing temperatures of 104, 110, 116 and 127°C (220, 230, 240 and 260°F). Again, Formulation No. 1 (the control) contained 20 percent PB 8640 and polyethylene as the control. It had a seal strength range of 158 to 318 between 104 and 127°C (220°F and 260°F). In contrast, Formulations Nos. 2 and 4 exhibited seal strengths at 116 and 127°C (240 and 260°F) which were strong compared to those exhibited by the control at 116 and 127°C (240 and 260°F). Formulation No. 5 resulted in seal strengths that were weak compared to the Control.

Formulation No. 3 exhibited seal strengths which were comparable to those of the control even though the seal strengths at 116 and 127°C (240 and 260°F) were higher than those of the control, they were not as high in Formulation No. 3 as they were in Formulation No. 2. Thus, the use of 5 percent polypropylene and only 15 percent PB 8640 results in seal strength values that are quite acceptable.

EXAMPLE 3

CAST FILM

Polybutylenes (1600SA, PB 8240, PB 8340 and PB 1710SA) each having a melt index of about 1 g/10 min. and a density of about 0.910 were dry blended in a tumbler mixer with polyethylene (USI NA 386) and/or polypropylene (Shell PP 5520 or Shell PP 5820). The resultant blends were extruded at a die temperature of about 216°C (420°F) into film of about 0.045 mm (1.75 mils) thick each using a flat die. Optical properties and peel seal strength were tested with the same procedure and method as stated in Example 1. The results obtained are shown in Tables 4 and 5.

## TABLE 4

### OPTICAL PROPERTIES OF CAST FILMS FROM EVA/PB/PP BLENDS FOR PEEL SEAL APPLICATIONS

| BLEND COMPOSITION | HAZE, % |
|---|---|
| 1. EVA + 25% PB 1600SA - Control | 44.1 |
| 2. EVA + 25% PB 8640 - Control | 47.7 |
| 3. EVA + 25% PB 8640 + 5% PP 5520 | 32.3 |
| 4. EVA + 25% PB 8340 - Control | 3.9 |
| 5. EVA + 25% PB 8340 + 5% 5820 | 2.7 |
| 6. EVA + 25% PB 1710SA | 30.2 |
| 7. EVA + 25% PB 8240 - Control | 9.6 |
| 8. EVA + 25% PB 8240 + 5% PP 5520 | 8.2 |

Note: EVA is Dupont Alathon 3134 at MI = 8.0 and VA Content = 12 w%

PB 1600SA is Shell Polybutylene at MI = 1.0 (ASTM D 1238 Condition "E", 190°C)

PB 8640 is Shell Polybutylene at MI = 1.0 (")

PB 8340 is Shell Polybutylene at MI = 4.0 (")

PB 8240 is Shell Polybutylene at MI = 2.0 (")

PP 5520 is Shell Polypropylene at MF = 5.0 (ASTM D 1238 Condition "L", 230°C)

PP 5820 is Shell Polypropylene at MF = 12.0 (")

Haze value based on ASTM D1003

Table 4 reveals optical properties of cast films made of EVA/polybutylene/polypropylene blends for peel seal applications. Formulation No. 1 contains EVA with 25 percent PB 1600SA as the control and resulted in

7

a haze value of 44.1 percent. Formulation No. 2 which contained 25 percent PB 8640 resulted in an even worse haze value of 47.7 percent. Formulation No. 3 had somewhat improved clarity over that exhibited by Formulation No. 2, attributable to the addition of 5 percent PP 5520.

Formulation Nos. 4 and 5 contained 25 percent PB 8340 and 25 percent PB 8340 and 5 percent PP 5820, respectively. It is evident that the use of PB 8340 substantially decreases the percent haze from that of the control and that the addition of 5 percent PP 5820 further reduces the percent haze to a quite acceptable value of 2.7 percent.

In contrast, Formulation No. 6 contained 25 percent PB 1710SA and exhibited a high haze value of 30.2 percent albeit an improved haze value over the control. Note that PB 1710SA contains 8% Shell PP 5520 and has the same type and amount of slip additive and antiblocking agent as does the control.

Formulation Nos. 7 and 8 contain 25 percent PB 8240, and 25 percent PB 8240 plus 5 percent PP 5520, respectively. Both haze values were low, the addition of the 5 percent PP 5520 resulted in a haze value even lower than that obtained in Formulation No. 7.

The preferred formulation in Table 4 is Formulation No. 8, which contains 25 percent PB 8240 and 5 percent PP 5520. Formulation No. 5 appears to have a better value than that of Formulation No. 8, however, Formulation No. 5 results in too much stickiness and problems in processing. It should also be noted from Table 4 that Formulation No. 1 (the control) represents the film coated on PVC used currently by major packaging companies which film currently exhibits as much as 20% haze, an unacceptable haze value for the applications discussed herein for high clarity packaging.

## TABLE 5
### PEEL-SEAL STRENGTH OF CAST FILMS FROM PB/EVA/PP BLENDS

PEELABLE SEAL STRENGTH, G/2.54 cm WIDTH

| BLEND COMPOSITIONS | SEALING TEMPERATURE $^{o}$C ($^{o}$F) | | | | |
|---|---|---|---|---|---|
| | 93 (200) | 99 (210) | 104 (220) | 116 (24 | 127 (260) |
| 1. EVA + 25% PB 1600SA - Control | 458 | - | 580 | 655 | - |
| 2. EVA + 25% PB 8640 - Control | 359 | - | 721 | 765 | - |
| 3. EVA + 25% PB 8640 + 5% PP 5520 | 73 | - | 415 | 440 | 891 |
| 4. EVA + 25% PB 8340 - Control | 113 | 150 | 400 | 551 | 931 |
| 5. EVA + 25% PB 8340 + 5% PP 5820 | 92 | 121 | 381 | 275 | 683 |
| 6. EVA + 25% PB 1710SA | 173 | 393 | 431 | 650 | - |
| 7. EVA + 25% PB 8240 - Control | 102 | 315 | 622 | 803 | - |
| 8. EVA + 25% PB 8240 + 5% PP 5520 | 118 | - | 364 | 400 | 520 |

Note: Film Thickness is 0.045 mm (1.75 Mils). Sealing
Conditions: 2 sec. Dwell 140 kPa (20 psi), Two Side
Heated and One Side with Teflon Cloth.
EVA is Dupont Alathon 3134 at MI = 8.0 and VA Content =
12%
PB 8640 is Shell Polybutylene at MI = 1.0 (ASTM D 1238
Condition "E", 190°C)
PB 8240 is Shell Polybutylene at MI = 2.0 (")
PB 8340 is Shell Polybutylene at MI = 4.0 (")
PP 5520 is Shell Polypropylene at MF = 5.0 (ASTM D1238
Condition "L", 230°C)

9

```
PP 5820 is Shell Polypropylene at MF = 12 (")
Seal strength tested by an Instron tester at 25.4
cm/min (10 inches/min).
```

Table 5 illustrates peel seal strength of cast films from EVA/polybutylene-1/polypropylene blends at various sealing temperatures from 93 to 127°C (200 to 260°F).

Formulation No. 1 in Table 5 is the control containing 25 percent PB 1600SA. It may be noted that the seal strength of Formulation Nos. 2, 3 and 6 in Table 5 is good, however, comparison of the optics of these three Formulation Nos. in Table 4 (Nos. 2, 3 and 6) reveals 47.7, 32.3 and 30.2 percent haze (entirely unacceptable). Formulation No. 5 of Table 4 resulted in seal strengths too low to be effective even though Formulation No. 5 exhibited extremely low percent haze in Table 4. Formulation No. 4 has both good peel seal strength and low haze value but the polymer mixture will be too tacky to process during film fabrication. Thus, the only Formulations in Table 5 which exhibited both comparable seal strength and low percent haze are Formulation Nos. 7 and 8, i.e. 25 percent PB 8240, and 25 percent PB 8240 and 5 percent PP 5520, however, Formulation No. 8 (which contained 5% PP 5520) exhibited the most preferred seal strength and lowest percent haze.

In summary, the addition of about 5 percent polypropylene (PP 5520) to approximately 15 to 25 percent polybutylene-1 and either about 80 percent polyethylene or about 70 percent EVA results in a unique film which has good peel seal strength, good processability and good optics.

## Claims

1. A packaging film or sheet of improved clarity and capable of forming peel seals, which comprises a mixture of:
   (a) from 65 to 85 percent by weight of an ethylene homopolymer or copolymer of ethylene with vinyl acetate or methyl acrylate;
   (b) from 5 to 30 percent by weight of a butene-1 homopolymer or copolymer; and
   (c) from 3 to 15 percent by weight of a propylene homopolymer or copolymer.

2. A packaging film or sheet according to claim 1 which contains from 70 to 80 percent by weight of (a), from 10 to 25 percent by weight of (b) and from 5 to 10 percent by weight of (c).

3. A packaging film or sheet according to claim 1 which contains about 80 percent by weight of (a), about 15 percent by weight of (b) and about 5 percent by weight of (c).

4. A packaging film or sheet according to claim 1, 2 or 3 wherein (a) is selected from linear low density polyethylene, low density polyethylene, medium density polyethylene, ethylene vinyl acetate copolymer, ethylene methyl acrylate copolymer and high density polyethylene.

5. A packaging film or sheet according to any one of the preceding claims which comprises an unoriented or oriented film or sheet.

6. A packaging film or sheet according to claim 5 which comprises a biaxially oriented film or sheet tube.

7. A blend for use in producing a packaging film or sheet comprising a mixture as defined in any one of claims 1 to 4.

8. A laminar structure comprising a substrate provided with a coating layer of a blend as claimed in claim 7 or to which is bonded a film or sheet as claimed in any one of claims 1 to 6.

9. A laminar structure according to claim 8, wherein said substrate is of nylon, polyester, polyvinyl chloride, high density polyethylene or polypropylene.

## Revendications

1. Film ou feuille d'emballage de transparence améliorée et capable de former des joints pelliculaires, qui

EP 0 178 061 B1

comprend un mélange comportant:

(a) de 65 à 85 pour cent en poids d'un homopolymère d'éthylène ou d'un copolymère d'éthylène et d'acétate de vinyle ou d'acrylate de méthyle.

(b) de 5 à 30 pour cent en poids d'un homopolymère ou copolymère de butène-1 et

(c) de 3 à 15 pour cent en poids d'un homopolymère ou copolymère de propylène.

2. Film ou feuille d'emballage selon la revendication 1, qui contient de 70 à 80 pour cent en poids de (a), de 10 à 25 pour cent en poids de (b) et de 5 à 10 pour cent en poids de (c).

3. Film ou feuille d'emballage selon la revendication 1, qui contient environ 80 pour cent en poids de (a), environ 15 pour cent en poids de (b) et environ 5 pour cent en poids de (c).

4. Film ou feuille d'emballage selon la revendication 1, 2 ou 3, dans lequel (a) est choisi parmi le polyéthylène linéaire basse densité, le polyéthylène basse densité, le polyéthylène moyenne densité, les copolymères éthylène-acétate de vinyle, les copolymères éthylène-acrylate de méthyle et le polyéthylène haute densité.

5. Film ou feuille d'emballage selon l'une quelconque des revendications précédentes, qui comprend un film ou une feuille orienté(e) ou non orienté(e).

6. Film ou feuille d'emballage selon la revendication 5, qui comprend un film ou une feuille tubulaire biaxialement orienté(e).

7. Mélange à utiliser pour préparer un film ou une feuille d'emballage, comprenant un mélange tel que défini dans l'une quelconque des revendications 1 à 4.

8. Structure stratifiée comprenant un substrat muni d'une couche de revêtement d'un mélange tel que revendiqué dans la revendication 7 ou auquel est lié(e) un film ou une feuille tel(le) que revendiqué(e) dans l'une quelconque des revendications 1 à 6.

9. Structure stratifiée selon la revendication 8, dans laquelle ledit substrat est en nylon, polyester, poly-(chlorure de vinyle), polyéthylène haute densité ou polypropylène.

**Patentansprüche**

1. Verpackungsfolie mit verbesserter Klarheit und der Fähigkeit, abziehbare dichte Verschlüsse zu bilden, die ein Gemisch aus:

(a) 65 bis 85 Gew.-% eines Ethylenhomopolymeren oder eines Copolymeren aus Ethylen und Vinylacetat oder Methylacrylat,

(b) 5 bis 30 Gew.-% eines Buten-1-homopolymeren oder -copolymeren, und

(c) 3 bis 15 Gew.-% eines Propylenhomopolymeren oder -copolymeren umfaßt.

2. Verpackungsfolie nach Anspruch 1, die 70 bis 80 Gew.-% (a), 10 bis 25 Gew.-% (b) und 5 bis 10 Gew.-% (c) enthält.

3. Verpackungsfolie nach Anspruch 1, die etwa 80 Gew.-% (a), etwa 15 Gew.-% (b) und etwa 5 Gew.-% (c) enthält.

4. Verpackungsfolie nach Anspruch 1, 2 oder 3, worin (a) aus linearem Polyethylen niedriger Dichte, Polyethylen niedriger Dichte, Polyethylen mittlerer Dichte, Ethylen/Vinylacetatcopolymer, Ethylen/Methylacrylatcopolymer und Polyethylen hoher Dichte ausgewählt ist.

5. Verpackungsfolie nach einem der vorangehenden Ansprüche, die eine nicht-orientierte oder orientierte Folie umfaßt.

6. Verpackungsfolie nach Anspruch 5, die eine(n) biaxial orientierte(n) Folie oder Folienschlauch umfaßt.

7. Gemisch zur Verwendung für die Herstellung einer Verpackungsfolie, das ein Gemisch, wie in einem

11

der Ansprüche 1 bis 4 definiert, umfaßt.

8. Laminare Struktur, das ein Substrat umfaßt, das eine Überzugsschicht aus einem Gemisch nach Anspruch 7 aufweist, oder an das eine Folie nach einem der Ansprüche 1 bis 6 gebunden ist.

9. Laminare Struktur nach Anspruch 8, worin das Substrat aus Nylon, Polyester, Polyvinylchlorid, Polyethylen hoher Dichte oder Polypropylen besteht.